# EUROPÄISCHE PATENTANMELDUNG

(11) **EP 0 873 710 A2**
(43) Veröffentlichungstag der Anmeldung: **28.10.1998**
(21) Anmeldenummer: 98105405.9
(22) Anmeldetag: 25.03.1998
(51) Int. Cl.: A47J 41/00

(54) **Isoliergefäss**

(30) Priorität: 23.04.1997 DE 29707356 U
(71) Anmelder: alfi Zitzmann GmbH Isoliergefässe und Metallwaren, D-97877 Wertheim (DE)
(72) Erfinder: de Gast, Barro, 20121 Milano (IT)
(74) Vertreter: Schwan, Gerhard, Dipl.-Ing.

(57) **Zusammenfassung**

Isoliergefäß mit einem doppelwandigen Isolierkörper, der einen nach oben offenen Raum zur Aufnahme eines Getränks bildet und der mittels eines Stopfens verschließbar ist. Das Isoliergefäß weist eine konvexe Standfläche auf, die ein Pendeln des Isoliergefäßes zuläßt, wobei jedoch die Form und/oder die Materialverteilung des Isoliergefäßes so gewählt ist/sind, daß ein Umfallen sowohl des ungefüllten als auch des mit einem Getränk gefüllten Isoliergefäßes vermieden ist.

## Beschreibung

Die vorliegende Erfindung bezieht sich auf ein Isoliergefäß mit einem doppelwandigen Isolierkörper, der einen nach oben offenen Raum zur Aufnahme eines Getränks bildet und der mittels eines Stopfens verschließbar ist.

Solche Isoliergefäße finden im Alltag häufig Anwendung, insbesondere zur Aufbewahrung und zur Ausgabe von Heiß- oder Kaltgetränken, wie beispielsweise Kaffee oder Tee.

Es ist Aufgabe der vorliegenden Erfindung, ein Isoliergefäß der eingangs genannten Art zu schaffen, welches neuartige Eigenschaften aufweist und zusätzlich zu seiner rein funktionalen Aufgabe der Aufbewahrung und Ausgabe eines Getränks weitere Funktionen erfüllt.

Diese Aufgabe wird erfindungsgemäß dadurch gelöst, daß ein Isoliergefäß mit einem doppelwandigen Isolierkörper, der einen nach oben offenen Raum zur Aufnahme eines Getränks bildet und der mittels eines Stopfens verschließbar ist, eine konvexe Standfläche aufweist, die ein Pendeln des Isoliergefäßes zuläßt, wobei jedoch die Form und/oder die Materialverteilung des Isoliergefäßes so gewählt ist/sind, daß ein Umfallen sowohl des ungefüllten als auch des mit einem Getränk gefüllten Isoliergefäßes vermieden ist. Durch diese besondere Ausgestaltung verhält sich das Isoliergefäß prinzipiell wie ein Stehaufmännchen und führt, wenn es angestoßen wird Pendel- oder Kreiselbewegungen aus. Insbesondere im befüllten Zustand ergeben sich dabei aufgrund der sich in dem Isolierkörper hin- und herbewegenden Flüssigkeit mehrere, einander überlagerte Bewegungen des Isoliergefäßes, die dem Benutzer desselben interessante Kurzweil verschaffen.

Das Isoliergefäß kann dabei einen Mantel aufweisen, in welchem der Isolierkörper untergebracht ist. Es wird jedoch bevorzugt, daß die Außenwand des doppelwandigen Isolierkörpers gleichzeitig die Außenwand des Isoliergefäßes bildet, und die Erfindung wird in, folgenden unter Bezugnahme auf ein solches Isoliergefäß beschrieben.

Weitere Ausgestaltungen der Erfindung ergeben sich aus den Unteransprüchen.

Insbesondere kann ein Bodenteil vorgesehen sein, welches die konvexe Standfläche bildet und welches an der Unterseite des Isolierkörpers angebracht ist, beispielsweise, indem es mit dem Isolierkörper verschraubt ist. Zwischen dem Bodenteil und dem Isolierkörper kann ferner ein Gewicht vorgesehen sein, um dafür zu sorgen, daß der Schwerpunkt des Isoliergefäßes so tief liegt, daß ein Umfallen sowohl des ungefüllten als auch des mit einem Getränk gefüllten Isoliergefäßes vermieden wird. Das Gewicht kann dabei in das Bodenteil eingearbeitet oder durch Wahl eines entsprechend schweren Werkstoffes für die Fertigung des Bodenteils realisiert sein.

Vorzugsweise weist der Isolierkörper nahe seiner Öffnung ein Innengewinde auf mit welchem ein an dem Stopfen ausgebildetes Außengewinde verschraubbar ist.

In weiterer Ausgestaltung der Erfindung kann auf den oberen Rand des Isolierkörpers ein Griffstück aufgesetzt und mit dem Isolierkörper verbunden sein. Durch geeignete Formgebung des Griffstücks, beispielsweise durch Wahl einer Form, die im wesentlichen einem einschaligen Hyperboloid entspricht, d.h. eines im wesentlichen rotationssymmetrischen Körpers, dessen Durchmesser zu beiden Enden hin zunimmt, ergibt sich ein Griffstück, mit welchem sich einerseits das Isoliergefäß gut greifen läßt, ohne daß Gefahr besteht, daß das Griffstück zwischen den Fingern hindurchrutscht, und ergibt sich andererseits ein Ausgießer für das in den Isolierkörper eingebrachte Getränk, wobei der Ausgießer unabhängig davon ist, in welche Richtung das Isoliergefäß geneigt wird.

Zur Verbesserung der Isolierwirkung kann der Raum zwischen der den doppelwandigen Isolierkörper bildenden Innen- und Außenwand evakuiert oder mit einem Isolierstoff, beispielsweise mit PU-Schaum, ausgeschäumt sein.

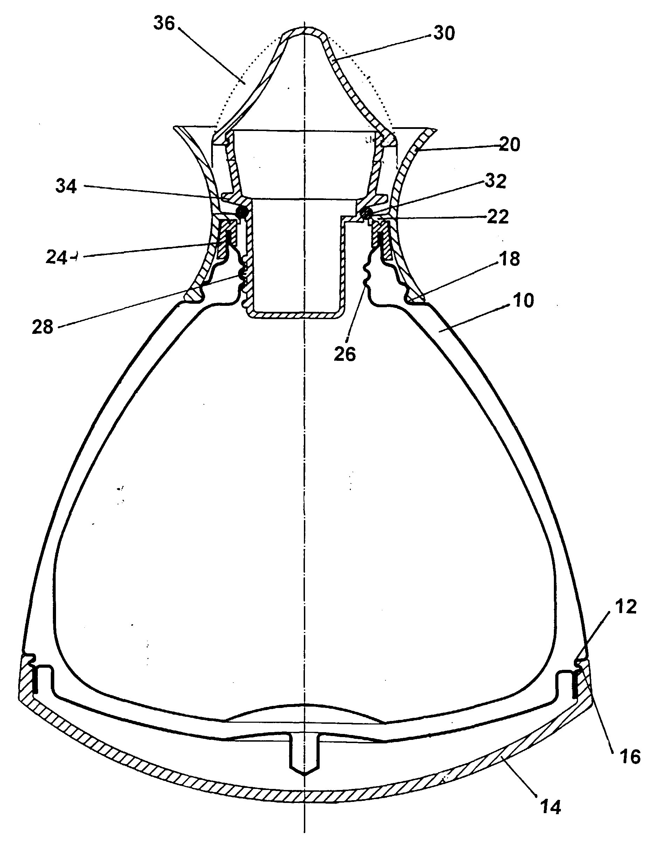

Ein Ausführungsbeispiel der Erfindung wird nachfolgend unter Bezugnahme auf die beiliegende Zeichnung näher erläutert, welche einen Schnitt durch das erfindungsgemäße Isoliergefäß zeigt.

Das in der Zeichnung dargestellte Isoliergefäß weist einen nach oben hin offenen doppelwandigen Isolierkörper 10 aus Edelstahl auf, der an seinem unteren Rand mit einem Gewinde 12 versehen ist. Ein Bodenteil 14, welches ein zu dem Gewinde 12 komplementäres Gewinde 16 aufweist, ist von unten mit dem Isolierkörper 10 verschraubt. Es versteht sich, daß die Ausbildung der Verbindung zwischen dem Isolierkörper 10 und den, Bodenteil 14 anstatt mittels den Gewinden 12 und 16 auch über andere Mittel erfolgen kann. Beispielsweise kann eines der beiden Bauteile mit einem Rand versehen sein, in welchen an dem anderen Bauteil ausgebildete Rastnocken bzw. ein verrastbarer Rand eingreifen und einschnappt. Die die Standfläche des Isoliergefäßes bildende Unterseite des Bodenteils 14 ist nach unten gewölbt, d.h. konvex.

In der Nähe seines oberen Randes weist der Isolierkörper an seiner Außenseite eine Nut 18 auf, mittels deren ein Griffstück 20 verrastet ist, welches von oben auf den Isolierkörper 10 derart aufgesetzt ist, daß es den oberen Rand des Isolierkörpers umgreift. Das Griffstück 20 hat im wesentlichen die Form eines einschaligen Hyperboloids, d.h. eines im wesentlichen rotationssymmetrischen Körpers, dessen Durchmesser zu beiden Enden hin zunimmt. Näherungsweise in dessen Mitte, gesehen in Richtung der Symmetrieachse, weist das Griffstück 20 einen Steg 22 auf, der eine Andruckfläche für eine zwischen dem Griffstück und dem Isolierkörper eingebrachte Dichtung 24 bereitstellt. An der Innenseite der Öffnung des Isolierkörpers 10 ist ein Gewinde 26 ausgebildet, welches mit einem Gewinde 28 eines Stopfens 30 zusammenwirkt, mittels welchem die Öffnung des Isolierkörpers 10 und damit der Raum zu Aufnahme des Getränks verschlossen werden kann. Zur besseren Abdichtung ist über den Stopfen ein O-Ring 32 aufgebracht, der sich beim Einschrauben des Stopfens 30 in das Gewinde 26 des Isolierkörpers 10 gegen den Steg 22 anlegt.

Wie aus der Zeichnung ersichtlich ist, ist der die Öffnung des Isolierkörpers 10 durchdringende Bereich des Stopfens 30 nicht kreissymmetrisch. Vielmehr ist mindestens ein Segment dieses Bereiches ausgespart, so daß das Verschließen des Getränkeaufnahmeraums nicht über das Zusammenwirken der Gewinde 26 und 28 erfolgt sondern über das Anlegen des O-Ringes 32 gegen den Steg 22. Zum Öffnen des Getränkeaufnahmeraums ist es daher ausreichend, den Stopfen 30 nur soweit herauszudrehen, daß sich der O-Ring 32 von seiner Anlagefläche auf dem Steg 22 löst, so daß der Stopfen 30 nicht vollständig aus dem Gewinde 26 herausgedreht werden muß und auch während dem Ausgießen des in dem Aufnahmeraum befindlichen Getränks auf dem Isolierkörper 10 verbleiben kann.

Der in der Zeichnung dargestellte Stopfen 30 weist des Weiteren einen umlaufenden Steg 34 auf. Dabei bildet der Steg 34 nicht nur eine Gegenfläche für den O-Ring 32 beim Einschrauben des Stopfens 30 in den Isolierkörper 10, sondern es entsteht außerdem ein Kanal für das aus dem Aufnahmeraum auszuschenkende Getränk, wenn das Isoliergefäß in einer Stellung bezüglich seiner Längsachse verkippt wird, in welcher der Bereich des Stopfens 30, an dem das Segment ausgespart ist, angehoben wird. Das auszuschenkende Getränk muß somit erst um den Stopfen herumfließen, bevor es über den Rand des Griffstücks 20 austritt.

Die Außenfläche des Isoliergefäßes einschließlich des Stopfens kann vollkommen rotationssymmetrisch mit Bezug auf die vertikale Achse des Isoliergefäßes sein. Vorzugsweise weist jedoch der Schraubstopfen 30 auf zwei gegenüberliegenden Seiten Einbuchtungen 36 auf, so daß sich der Stopfen 30 beim Einschrauben in den Isolierkörper 10 bzw. beim Herausschrauben aus dem Isolierkörper besser greifen läßt.

## Patentansprüche

1. Isoliergefäß mit einem doppelwandigen Isolierkörper (10), der einen nach oben offenen Raum zur Aufnahme eines Getränks bildet und der mittels eines Stopfens (30) verschließbar ist, dadurch gekennzeichnet, daß das Isoliergefäß eine konvexe Standfläche aufweist, die ein Pendeln des Isoliergefäßes zuläßt, wobei jedoch die Form und/oder die Materialverteilung des Isoliergefäßes so gewählt ist/sind, daß ein Umfallen sowohl des ungefüllten als auch des mit einem Getränk gefüllten Isoliergefäßes vermieden ist.

2. Isoliergefäß nach Anspruch 1, dadurch gekennzeichnet, daß ferner ein Bodenteil (14) vorgesehen ist, welches die konvexe Standfläche bildet und welches an der Unterseite des Isolierkörpers (10) angebracht ist.

3. Isoliergefäß nach Anspruch 2, dadurch gekennzeichnet, daß der Isolierkörper (10) und das Bodenteil (14) miteinander verschraubt oder verrastet sind.

4. Isoliergefäß nach Anspruch 2 oder 3, dadurch gekennzeichnet, daß zwischen dem Bodenteil (14) und dem Isolierkörper (10) ein Gewicht vorgesehen ist.

5. Isoliergefäß nach einem der vorhergehenden Ansprüche, dadurch gekennzeichnet, daß der Isolierkörper (10) nahe seiner Öffnung ein Innengewinde (26) aufweist, mit welchem ein an dem Stopfen (30) ausgebildetes Außengewinde (28) verschraubbar ist.

6. Isoliergefäß nach einem der vorhergehenden Ansprüche, dadurch gekennzeichnet, daß auf den oberen Rand des Isolierkörpers (10) ein Griffstück (20) aufgesetzt und mit dem Isolierkörper verbunden ist.

7. Isoliergefäß nach Anspruch 6, dadurch gekennzeichnet, daß das Griffstück (20) im wesentlichen die Form eines einschaligen Hyperboloids aufweist.

8. Isoliergefäß nach einem der vorhergehenden Ansprüche, dadurch gekennzeichnet, daß der Raum zwischen der Innenwand und Außenwand, die den doppelwandigen Isolierkörper (10) bilden, evakuiert oder ausgeschäumt ist.

9. Isoliergefäß nach einem der vorhergehenden Ansprüche, dadurch gekennzeichnet, daß der Isolierkörper (10) aus Edelstahl gefertigt ist.

10. Isoliergefäß nach einem der vorhergehenden Ansprüche, dadurch gekennzeichnet, daß die Außenfläche des Isoliergefäßes rotationssymmetrisch mit Bezug auf die vertikale Achse des Isoliergefäßes ist.
